# EUROPEAN PATENT SPECIFICATION

(11) **EP 2 665 940 B1**
(45) Date of publication and mention of the grant of the patent: **24.10.2018**
(21) Application number: 12703164.9
(22) Date of filing: 20.01.2012
(51) Int. Cl.: F16B 15/00, F16B 19/14, F16B 43/00, F16L 3/00

(54) **A FASTENING DEVICE FOR AN ATTACHMENT ON A HARD MATERIAL SUPPORTING WALL**
BEFESTIGUNGSVORRICHTUNG ZUR ANBRINGUNG AN EINER STÜTZMAUER AUS EINEM HARTEN MATERIAL
DISPOSITIF DE FIXATION POUR UN ACCESSOIRE SUR UN MUR DE SUPPORT EN MATÉRIAU DUR

(30) Priority: 20.01.2011 FR 1100172
(43) Date of publication of application: 27.11.2013
(73) Proprietor: SOCIETE DE PROSPECTION ET D'INVENTIONS TECHNIQUES SPIT, 26501 Bourg-Les-Valence Cédex (FR)
(72) Inventor: POURTIER, Fabrice, F-26800 Portes-Les-Valence (FR)
(74) Representative: Gevers & Orès
(86) International application number: PCT/IB2012/050286
(87) International publication number: WO 2012/098529

(56) References cited:
- EP-A1- 0 930 442
- EP-A1- 1 099 864
- EP-A1- 1 645 370
- EP-A1- 2 107 259
- DE-C1- 4 327 436

## Description

The present invention relates to a device for fastening an attachment on a hard material supporting wall, using a powder or gas sealing tool.

Such a device is known from EP 1 099 864 A1.

As an example, the attachments to be fastened could be supports for elongated object, such as electric and optical cables, pipes and hoses, multi-cable clips, etc.... allowing them to be held according to a predetermined path along the relevant wall (wall, ceiling, false ceiling, etc....) of a structure. However, the attachments to be fastened could have other functions such as anchoring objects without departing from the scope of this invention.

Known fastening devices generally comprise, according to a longitudinal axis, a holding part for the attachment and a nail for fastening the holding part and thus, the attachment to the wall.

The holding part is often metallic, with a flattened shape, and it is axially applied on the attachment engaging into a passage hole provided therein. On the opposite of its engagement into the hole, the holding part is continued with a deformable channel wherein the stem of the fastening nail is partially engaged for axial guiding purposes, and against which the head of the nail becomes abutted, as a result of the shot of the tool.

Such a device further comprises a cylindrical member, made in polyethylene for example, surrounding the stem of the nail and located in the continuation of the channel in the holding part. Such a member ensures the guiding and the holding of the fastening device in the tip-guide of the tool.

After introducing the fastening device, having the shape of a monobloc once being assembled, in the tip-guide of the tool, with the holding part out of the latter, such a holding part is engaged into the passage hole of the attachment until it is axially applied in periphery of the latter, then the shot is triggered. The stem of the nail crosses the attachment and gets stuck into the wall, until a contact of its head against the deformable channel of the holding part, the cylindrical polyethylene member becoming deformed as a result of the shot.

Although this gives good results in terms of fastening as such, it happens that attachments, due to the fact that they are made in a plastic material, become damaged as a result of the shock wave transmitted on them by the holding part against which the head of the nail propelled by the tool is forcibly applied.

Thus, the object of the application aims at a device for fastening an attachment on a hard material supporting wall, fastening occurring using a powder or a gas sealing tool, comprising:
- a holding part for the attachment on the wall,
- a fastening nail for said holding part, and
- a damping member for the absorption of the power generated by the tool.

Thus, for trying to overcome the drawback of the attachment being damaged, such a fastening device is known, wherein the holding part ends, on the side opposite its end engaged in the passage hole of the attachment, with an external radial collar. Between the latter and the attachment, the damping member is provided, surrounding the holding part and intended for absorbing at the best the power generated by the shot from the tool.

It is thus understood that, as a result of the shot of the tool driving the stem of the nail into the wall, the damping member becomes compressed and absorbs the power generated when the head of the nail comes in contact with the collar of the metallic part, that is able to be driven into the wall. The attachment is therefore protected.

However, it is found that such a solution does not provide a total integrity for the attachments as, despite such damping members, the attachments could be damaged. Indeed, at the time of the contact of the head of the nail with the collar, the axial force generated by the tool on the nail is then maximum and directly transmitted to the holding part, so that, even with such a damping member only partially absorbing the power of the shock, the plastic material attachment is likely to split or to break and the associated fastening device, to be lost.

The present invention aims at overcoming such a drawback and relates to a fastening device having a design such that it prevents attachments from being damaged, while ensuring them to be safely and reliably positioned on a wall.

Thus, the object of the application relates to a device for fastening an attachment on a hard material supporting wall, fastening occurring using a powder or a gas sealing tool, comprising:
- a holding part for the attachment on the wall,
- a fastening nail for said holding part, and
- a damping member for the absorption of the power generated by the tool,
the device being remarkable in that said damping member is arranged between the fastening nail and the holding part so as to isolate one from the other.

Thus, thanks to this invention, the damping member acts as an isolating interface between the fastening nail and the holding part, so that the latter, upon a shot of the tool, is not submitted to the shock wave transmitted by the nail and filtered by the damping member, ensuring, as a result, the integrity of the plastic material made attachment and preventing the associated fastening device from being lost.

In a preferred embodiment, said damping member has the shape of a sheath surrounding the stem of the fastening nail and engaging into the holding part. Thus, the sheath extends substantially on the length of the nail while ensuring an optimum isolation.

For holding the fastening device in the tip-guide of the tool until the time of the shot, said damping member has, advantageously, in the external periphery, a radial widening. This imparts an additional function to the damping member.

According to an embodiment, the radial widening is defined by an external shoulder provided at the end of the damping member facing the head of the nail.

According to another embodiment, the radial widening is defined by a plurality of lateral fins arranged parallel in the periphery of the damping member.

Whatever the embodiment is, the radial widening of the device adapts in the tip-guide of the tool, the diameter of the head of the nail being further able to be substantially equal to that of the widening for also taking part in the guiding.

Furthermore, said lateral fins of the damping member also define axial abutments of the latter with respect to said holding part.

According to a preferred embodiment, said holding part comprises a cylindrical part being able to engage into a passage hole provided in the attachment, and an external collar, ending the cylindrical part and coming in axial abutment against the circumference of the passage hole of the attachment, opposite the supporting wall.

In particular, said damping member is made in an elastically deformable material and said holding part is metallic.

This invention will be better understood from the following description of the fastening device for an attachment on a supporting wall, by means of a sealing tool, with reference to the appended drawing, wherein:
- Fig. 1 schematically illustrates, in an axial sectional view, an embodiment of the fastening device according to this invention;
- Fig. 2 is a perspective view of the fastening device of Fig. 1;
- Fig. 3 illustrates, in an axial sectional view, another embodiment of the fastening device;
- Fig. 4 shows, in a perspective view, the device of Figs. 1 and 2 mounted in an attachment for receiving elongated objects, to be fastened on a supporting wall;
- Fig. 5 shows, in a longitudinal section, the attachment before being fastened to the supporting wall by the device according to this invention through the tool; and
- Fig. 6 shows, in a longitudinal section, the attachment fastened to the supporting wall by the device as a result of the tool being actuated.

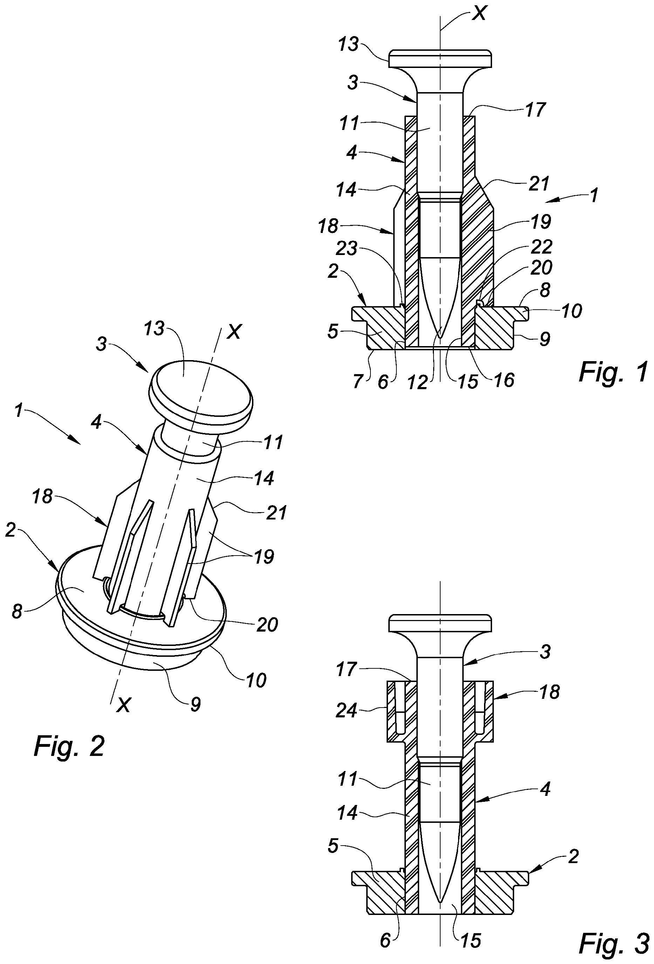

The fastening device 1, as shown on Figs. 1 and 2, is intended for being driven in a hard material supporting wall, including, concrete, from a powder or gas sealing tool for fastening therein an attachment, to be further described subsequently.

For this end, the fastening device 1 comprises, according to a longitudinal axis of symmetry X, a holding part 2 for the attachment on the wall, a fastening nail 3 for the holding part and a damping member 4 for absorbing the power generated by the shot of the tool and preventing the attachment from being damaged, as will be described later on.

In particular, the holding part 2 has a flattened cylindrical shape, defined by an annular lateral wall 5 having, in its center, an axial hole 6 coming out of the end transversal sides 7, 8 of the part 2. The wall 5 thereof comprises a cylindrical part 9 able to engage into a passage hole of the attachment, and a collar part 10 arranged so as to come in abutment against the attachment, around the periphery of the hole.

The fastening nail 3, made in a metallic material being compatible with such a driving into the concrete, usually comprises a stem 11 having an appropriate length, ending on one side with a tip 12 and, on the other side, with a flat head 13. The stem here has substantially in its center a slight diameter change, so that the diameter of the stem on the tip side 12 is slightly lower than the diameter of the stem on the head side 13. Such a characteristic could be omitted.

As far as the damping member 4 is concerned, it is made in a power absorbing isolating material, being elastically deformable in a plastic synthetic or natural material (rubber). The damping member 4 has the shape of a cylindrical sheath 14 having a through axial passage 15 for receiving the fastening nail 3 and engaging, in a removable way, into the axial hole 6 of the holding part 2.

In accordance with this invention, it is to be noticed that mounting the sheath 14 on the fastening device 1 is such that it isolates the holding part 2, able to cooperate with the attachment, from the fastening nail 3, able to be propelled by the tool, as shown in Fig. 1.

More particularly, the fastening nail 3 is relatively introduced forcibly, through its larger diameter stem part 11, into the axial passage 15 of the sheath, until the tip 12 of its part of reduced diameter reaches in the vicinity of the corresponding end transversal side 16 of the sheath 14. On the opposite side, the head 13 of the nail is located remotely from the other end transversal side 17 of the sheath. The stem 11 is thus sheathed by the latter and, thus, isolated from the holding part 2. The fastening nail 3 and the damping member 4 are then assembled firmly one with respect to the other.

As far as the removable assembly is concerned between the damping member 4 and the holding part 2, this occurs between the transversal side 16 corresponding end of the sheath 14 and the axial hole 6 in the wall 5 of the holding part 2, as an adjustment without any excessive clamping. Thus, the sheath 14 is centered correctly with respect to the latter and thus appropriately perpendicular. The axial engagement of the sheath 14 into the hole 6 is such that the transversal side 16 of its introduced end is substantially flush with the transversal side 7 of the holding part.

Furthermore, as can be seen on Figs. 1 and 2, the sheath 14 of the damping member 4 comprises, on its external periphery, a radial widening 18 resulting, in the embodiment of the fastening device on Figs. 1 and 2, by a plurality of lateral fins 19, being equiangularly distributed one to the other with respect to the longitudinal axis X. Five parallel fins 19 are here provided in this embodiment although such a number is not exclusive.

Such fins are mainly intended to hold and guide the fastening device 1 in the tip-guide of the tool as will be seen subsequently and, to this end, the external circumference of such fins 19 has a diameter being at least equal to that of the flat head of the nail. Such fins have, in this embodiment, another aim, i.e. to act as an axial abutment upon the introduction of the sheath 14 in the holding part 2.

Indeed, such fins end into radial edges 20 applying on the transversal side 8 of the collar 10 of the holding part 2, around the axial hole 6. Once mounted, the transversal side end 16 of the sheath does not project from the holding part 2.

The fins 19 extend approximately in the median part of the sheath 14 and end, opposite the radial edges 20, with tilted edges 21 promoting the introduction of the tip-guide

It is furthermore to be noticed, that the radial edges of the fins 19 each have an internal clearance 22 for preventing, upon the damping member 4 being mounted against the holding part 2, any contact with a circular shoulder 23 projecting from the transversal side 8 opposite this part.

In the fastening device 1 as shown on Fig. 3, only the way the radial widening 18 of the damping member 4 is achieved is different. In such an alternative, the radial widening 18 is defined by an external annular edge or shoulder 24 provided, for instance, at the level of the transversal side 17 of the sheath 14 facing the head 13 of the nail. The diameter of the shoulder 24 is at least equal to that of the head of the fastening nail 3.

Such a shoulder 24 extends on a length sufficient for providing the device 1 with appropriate holding and guiding in the tip-guide of the tool.

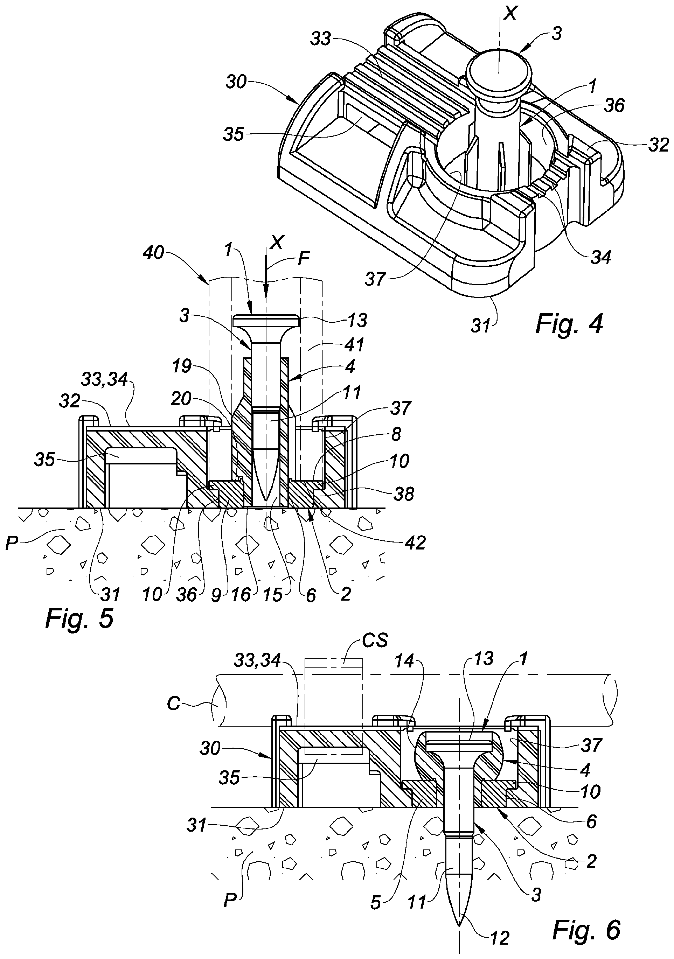

The attachment 30 shown on Figs. 4 and 5 acts, as been reminded in the preamble, as a support for elongated objects, such as cables C (Fig. 6), that is to follow a determined path along a supporting wall P (walls, ceilings, etc, ...) made in a hard material. The supporting attachments 30 are to be fastened regularly on the walls P met by the fastening devices 1 propelled by the tool 40, then on such fastened supporting attachments 30, the cable(s) C is or are arranged being subsequently held on them, for example, by means of fitting collars CS (Fig 6).

The supporting attachment 30 is made in a plastic material and has a roughly flattened parallelepiped shape, with an abutment side 31 able to be applied against the wall P, and an opposite side 32 faced to the exterior and provided with a receiving or abutting area 33 for the cable C, with longitudinal grooves 34.

In addition, in such an attachment 30 openings 35 are arranged, on one side thereof, running under a part of the grooved reception area 33 for positioning the fitting collar CS, and on the other side, a passage hole 36 perpendicularly coming out of the sides 31 and 32 of the attachment, running through the reception area 33. Such a hole 36 receives the fastening device 1 and, in particular, the cylindrical part 9 of the holding part 2, such a part being fitted in the hole 36, whereas a recess 37 widens the hole 36 for allowing the collar 10 to cross the holding part, until it is in abutment against the internal shoulder 38 created by the diameter change of the hole 36.

Dimensionally, the length of the cylindrical part 9 is at the most equal to the depth of the hole 36 (without the recess) so that the transversal side 7 of the part 2 does not project from the abutment side 31 of the attachment 30 when the collar 10 is applied on the shoulder 38.

When the assembled fastening device 1 is engaged, via its holding part 2, into the passage hole 36 of the attachment 30, this means that it has been preliminarily introduced into the cylindrical tip-guide 41 of the sealing tool 40 shown partially and schematically on Fig. 5. The holding part 2 could also be mounted first in the reception hole 6 for the attachment 30, and afterwards the damping member 4 introduced into the tool 40 is engaged into the hole 6 of the part 2 arranged in the attachment. Whatever the case, the device 1 is held in the tip-guide 41 by the deformable fins 19 of the damping member 4 enclosing the stem 11 of the nail 3. The front transversal side 42 of the tip-guide 41 comes in contact with the transversal side 8 of the holding part 2 and it can be seen that the latter and the fastening nail 3 are completely isolated one from the other by the damping member 4 furthermore ensuring the holding function of the device 1 by the fins in the tool 40.

Once the abutment side 31 of the attachment 30, abutted at the desired location against the wall P, the sealing tool 40 with the fastening device 1 is actuated.

Triggering the shot, being incidentally indirect, via a non shown intermediary plunger results in a significant pressure being applied on the head 13 of the nail, symbolised by an arrow F according to the axis X, as a result of the considerable power developed by the powder or the gas. Such a pressure generated y the high intensity contact of the plunger against the head of the nail involves shock wave phenomena (vibrations) in the nail 3. As the head 13 of the nail first hits the side 17 of the damping member 4 isolating the holding part 2 and the plastic material made attachment 30 of the fastening nail 3, the above mentioned phenomena are only taken over totally by the power absorption deformable material sheath 14 of the member 4 and do not affect or are not transmitted to the attachment 30, including at the level of the location where the metallic holding part 2 comes into contact, via its collar 10, with the attachment 30. The latter is thereby saved.

The final position, i.e. the attachment 30 fastened to the wall P, is illustrated on Fig. 6. It can be more specifically seen that the stem 11 of the nail for fastening 3 the device 1 is driven into the wall P and that the head 13 of the nail has crushed the isolating damping member 4 so that, after the shot, the head 13 with the member 4 is embedded in the recess 37 of the hole 36 of the attachment. Thus, the grooved reception area 33, 34 is free and can receive afterwards the cable C being maintained in position on the attachment by the fitting collar CS illustrated in mixed line and running, through the openings 35, around the grooved area and the cable C.

## Claims

1. A device for fastening an attachment (30) on a hard material supporting wall, the fastening occurring by a powder or gas sealing tool (40), comprising:
- a holding part (2) for the attachment on the wall,
- a fastening nail (3) for said holding part, and
- a damping member for the absorption of the power generated by the tool,
**characterized in that** said damping member (4) is arranged between the fastening nail (3) and the holding part (2) so as to isolate one from the other.

2. The device according to claim 1, wherein said damping member (4) has the shape of a sheath (14) surrounding the stem (11) of the fastening nail (3) and engaging into the holding part (2).

3. The device according to any one of claims 1 or 2, wherein said damping member (4) has, in its external periphery, a radial widening (18) for holding the device in the tip-guide of the tool.

4. The device according to claim 3, wherein the radial widening (18) is defined by an external shoulder (24) provided at the end of the damping member facing the head of the nail.

5. The device according to claim 3, wherein the radial widening (18) is defined by a plurality of lateral fins (19) arranged parallel in the periphery of the damping member (4).

6. The device according to claim 5, wherein said lateral fins (19) of the damping member define axial abutments of the latter with respect to said holding part.

7. The device according to any one of claims 1 to 6, wherein said holding part (2) comprises a cylindrical part (9) able to engage into a passage hole provided in the attachment, and an external collar (10), ending the cylindrical part (9) and coming in axial abutment against the circumference of the hole of the attachment, opposite the supporting wall.

8. The device according to any one of claims 1 to 7, wherein said damping member (4) is made in an elastically deformable material and said holding part (2) is metallic.

## Patentansprüche

1. Vorrichtung zur Befestigung eines Anbauelements (30) an einer Stützwand aus hartem Material, wobei die Befestigung durch ein Pulver- oder Gasversiegelungswerkzeug (40) erfolgt, umfassend:
- ein Halterungsteil (2) für das Anbauelement an der Wand,
- einen Befestigungsnagel (3) für das Halterungsteil und
- ein Dämpfungsglied für die Absorption der durch das Werkzeug erzeugten Kraft,
**dadurch gekennzeichnet, dass** das Dämpfungsglied (4) zwischen dem Befestigungsnagel (3) und dem Halterungsteil (2) angeordnet ist, um sie voneinander zu isolieren.

2. Vorrichtung nach Anspruch 1, wobei das Dämpfungsglied (4) die Form einer den Schaft (11) des Befestigungsnagels (3) umgebenden und in das Halterungsteil (2) eingreifenden Hülse (14) aufweist.

3. Vorrichtung nach einem der Ansprüche 1 oder 2, wobei das Dämpfungsglied (4) in seinem Außenrand eine radiale Erweiterung (18) zum Halten der Vorrichtung in der Spitzenführung des Werkzeugs aufweist.

4. Vorrichtung nach Anspruch 3, wobei die radiale Erweiterung (18) durch eine am Ende des Dämpfungsglieds dem Kopf des Nagels zugewandt bereitgestellte äußere Schulter (24) definiert ist.

5. Vorrichtung nach Anspruch 3, wobei die radiale Erweiterung (18) durch eine Mehrzahl parallel im Rand des Dämpfungsglieds (4) angeordneter seitlicher Rippen (19) definiert ist.

6. Vorrichtung nach Anspruch 5, wobei die seitlichen Rippen (19) des Dämpfungsglieds axiale Anschläge des letzteren in Bezug auf das Halterungsteil definieren.

7. Vorrichtung nach einem der Ansprüche 1 bis 6, wobei das Halterungsteil (2) ein zylindrisches Teil (9), das dazu in der Lage ist, in ein im Anbauelement bereitgestelltes Durchgangsloch einzugreifen, und einen äußeren Kragen (10), der das zylindrische Teil (9) abschließt und in axialen Anschlag gegen den Umfang des Lochs des Anbauelements gegenüber der Stützwand kommt, umfasst.

8. Vorrichtung nach einem der Ansprüche 1 bis 7, wobei das Dämpfungsglied (4) in einem elastisch verformbaren Material gefertigt ist und das Halterungsteil (2) metallisch ist.

## Revendications

1. Dispositif de fixation d'un accessoire (30) sur un mur de support en matériau dur, la fixation se produisant par un outil d'étanchéité à poudre ou à gaz (40), comprenant :
- une partie de support (2) pour la fixation sur le mur,
- un clou de fixation (3) pour ladite partie de support, et
- un élément d'amortissement pour l'absorption de la puissance générée par l'outil,
**caractérisé en ce que** ledit élément d'amortissement (4) est disposé entre le clou de fixation (3) et la partie de support (2) de sorte à isoler l'un de l'autre.

2. Dispositif selon la revendication 1, ledit élément d'amortissement (4) ayant la forme d'une gaine (14) entourant la tige (11) du clou de fixation (3) et venant en prise dans la partie de support (2).

3. Dispositif selon la revendication 1 ou 2, ledit élément d'amortissement (4) ayant, dans sa périphérie externe, un élargissement radial (18) pour maintenir le dispositif dans le guide de pointe de l'outil.

4. Dispositif selon la revendication 3, l'élargissement radial (18) étant défini par un épaulement externe (24) disposé à l'extrémité de l'élément d'amortissement faisant face à la tête du clou.

5. Dispositif selon la revendication 3, l'élargissement radial (18) étant défini par une pluralité d'ailettes latérales (19) disposées parallèlement dans la périphérie de l'élément d'amortissement (4).

6. Dispositif selon la revendication 5, lesdites ailettes latérales (19) de l'élément d'amortissement définissant des butées axiales de ce dernier par rapport à ladite partie de support.

7. Dispositif selon l'une quelconque des revendications 1 à 6, ladite partie de support (2) comprenant une partie cylindrique (9) pouvant venir en prise avec un trou de passage pratiqué dans l'accessoire, et un collier externe (10), terminant la partie cylindrique (9) et venant en butée axiale contre la circonférence du trou de l'accessoire, à l'opposé du mur de support.

8. Dispositif selon l'une quelconque des revendications 1 à 7, ledit élément d'amortissement (4) étant en un matériau élastiquement déformable et ladite partie de support (2) étant métallique.
